# EUROPEAN PATENT APPLICATION

(11) **EP 4 711 817 A1**
(43) Date of publication of application: **18.03.2026**
(21) Application number: 25197960.5
(22) Date of filing: 25.08.2025
(51) Int. Cl.: G01S 19/14, G01S 19/21, G01S 19/48, G01S 5/00, G08G 5/21, G08G 5/25, G08G 5/26, G08G 5/72

(54) **DETERMINING VEHICLE POSITION FOR AUTOMATIC DEPENDENT SURVEILLANCE-BROADCAST (ADS-B) AND TRAFFIC COLLISION AVOIDANCE SYSTEM (TCAS) IN THE PRESENCE OF GLOBAL NAVIGATION SATELLITE SYSTEM (GNSS) SPOOFING OR JAMMING**

(30) Priority: 17.09.2024 IN 202411070145; 07.01.2025 US 202519011833
(71) Applicant: Honeywell International Inc., Charlotte, NC 28202 (US)
(72) Inventor: MARIAPPAN, Karthikeyan, Charlotte, 28202 (US); BALADHANDAPANI, Gobinathan, Charlotte, 28202 (US); VAITHILINGAM, Ganesh Kumar, Charlotte, 28202 (US); KRISHNAN, Vignesh, Charlotte, 28202 (US)
(74) Representative: Haseltine Lake Kempner LLP

(57) **Abstract**

A method of improving an Automatic Dependent Surveillance-Broadcast (ADS-B) message for a first vehicle is provided. The method includes: determining whether Global Navigation Satellite System (GNSS) signals are spoofed or jammed in an area of the first vehicle; when GNSS signals are spoofed or jammed, determining an alternate position of the first vehicle using an alternative navigation technology different from a single GNSS constellation or multiple GNSS constellations; and broadcasting the ADS-B message containing the alternate position of the first vehicle determined using the alternative navigation technology.

## Description

### CROSS-REFERENCE TO RELATED APPLICATIONS

This application claims benefit of Indian Provisional Patent Application No. 202411070145, filed on September 17, 2024, and titled "DETERMINING VEHICLE POSITION FOR AUTOMATIC DEPENDENT SURVEILLANCE-BROADCAST (ADS-B) AND TRAFFIC COLLISION AVOIDANCE SYSTEM (TCAS) IN THE PRESENCE OF GLOBAL NAVIGATION SATELLITE SYSTEM (GNSS) SPOOFING OR JAMMING", the contents of which are incorporated herein in their entirety.

### BACKGROUND

Global Navigation Satellite System (GNSS) is a satellite-based navigation system that provides precise location and timing information to GNSS receivers. Examples of GNSS include: the Global Positioning System (GPS) operated by the United States Government, Globalnaya Navigatsionnaya Sputnikovaya (GLONASS) operated by the Russian government, Galileo operated by the European Union Agency for the Space Programme, and BeiDou satellite navigation system operated by the China National Space Administration. Additionally, India has launched a Regional Navigation Satellite System (RNSS) with an operational name of NavIC. This GNSS (including RNSS) technology has become an integral and irreplaceable part of various sectors, including transportation, logistics, telecommunications, military, and emergency services. However, the increasing reliance on GNSS also makes it susceptible to malicious activities such as spoofing and jamming.

GNSS Spoofing is a technique where radio transmitters are used to send strong counterfeit GNSS signals to deceive the GNSS receivers and make them compute wrong position/time information. A GNSS-denied environment is a region where the signals from GNSS satellites are spoofed to provide wrong user position or blocked using jammers to deny the GNSS receivers from receiving the satellite signals.

Traffic Collision Avoidance System (TCAS) is a system in a vehicle that displays the position of other vehicles in the vicinity relative to the vehicle. TCAS receives the position from each of the other vehicles in an Automatic Dependent Surveillance-Broadcast (ADS-B) message transmitted by each of the other vehicles. TCAS displays aircraft positions and generates alerts if a collision detection procedure detects a collision course based on the position information in the ADS-B messages.

Unfortunately, the ADS-B messages use GNSS signals to determine the position of the vehicle. With the ever-increasing threat of GNSS spoofing or jamming, the reliance of TCAS on the GNSS-derived position data of the ADS-B messages may result in: (1) displaying the wrong position of some or all ADS-B enabled aircraft in the GNSS spoofed/jammed environment, (2) lack of awareness of the existence of all the aircraft in the GNSS denied environment, (3) Air Traffic Control (ATC) clearing an aircraft for takeoff or landing based on wrong position information for aircraft in the vicinity, (4) increasing the probability of collisions. Thus, existing TCAS is unable to provide for safe operation of aircraft in areas of GNSS spoofing or jamming.

### SUMMARY

In one aspect, a method of improving an Automatic Dependent Surveillance-Broadcast (ADS-B) message for a first vehicle is provided. The method includes: determining whether Global Navigation Satellite System (GNSS) signals are spoofed or jammed in an area of the first vehicle; when GNSS signals are spoofed or jammed, determining an alternate position of the first vehicle using an alternative navigation technology different from a single GNSS constellation or multiple GNSS constellations; and broadcasting the ADS-B message containing the alternate position of the first vehicle determined using the alternative navigation technology.

In another aspect, a method of improvising a Traffic Collision Avoidance system (TCAS) for a first vehicle is provided. The method includes: receiving an Automatic Dependent Surveillance-Broadcast (ADS-B) message at the first vehicle from at least one other vehicle with a current position of the at least one other vehicle determined using a single GNSS constellation or multiple GNSS constellations; sending a request for an alternative position of the at least one other vehicle to a server, wherein the alternative position is determined using an alternative navigation technology different from the single GNSS constellation or multiple GNSS constellations; receiving the alternative position of the at least one other vehicle from the server; and when the current position in the ADS-B message is an inaccurate position, displaying the alternative position of the at least one other vehicle received from the server on a TCAS display of the first vehicle.

### BRIEF DESCRIPTION OF THE DRAWINGS

Embodiments of the present invention can be more easily understood and further advantages and uses thereof more readily apparent, when considered in view of the description of the preferred embodiments and the following figures in which:
FIG. 1 is a diagram that illustrates an environment for implementing embodiments of an improvised Traffic Collision Avoidance System (TCAS) and an improvised Automatic Dependent Surveillance-Broadcast (ADS-B) to improve safety in vehicle operation.
FIG. 2 is a block diagram of one embodiment of a system for implementing an improvised TCAS and/or an improvised ADS-B.
FIG. 3 is a flowchart of one embodiment of a method for improvising an ADS-B for sending position information to neighboring vehicles for use in a TCAS.
FIG. 4 is flowchart of one embodiment of a method for improvising a TCAS to determine accurate position data for neighboring vehicles in the presence of GNSS spoofing or jamming.
FIG. 5 is a graphical representation of one embodiment of a display for the improvised TCAS of the system of FIG. 2.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Traffic Collision Avoidance System (TCAS) is a safety system installed on an aircraft to help prevent mid-air collisions with other aircraft. In one aspect, TCAS displays the current position of other aircraft in the vicinity relative to the aircraft. In conventional systems, the TCAS receives position information for other aircraft in the vicinity in Automatic Dependent Surveillance-Broadcast (ADS-B) messages from the other aircraft. This position information in the ADS-B messages is derived from Global Navigation Satellite System (GNSS) signals received by the other aircraft. As described above, the signals received from GNSS are prone to spoofing and jamming. Thus, the position information derived from spoofed/jammed GNSS data is inaccurate and leads to potential safety issues with current TCAS.

Embodiments of the present invention provide methods to improvise a TCAS display using available alternate navigation sensors on vehicles operating in a GNSS spoofed or jammed environment. For purposes of this specification, the term "improvise" or "improvised" means a modified version of an existing system that provides improved functionality over the existing system. Embodiments of the present invention provide an improvised TCAS that performs the same functions as a conventional TCAS but with a modification that improves the operation of the TCAS. Specifically, embodiments of the improvised TCAS improve safety by providing accurate position data to the TCAS in the presence of GNSS spoofing or jamming.

In one embodiment, described in more detail below, the operation of the ADS-B is improvised when a vehicle operates in an environment with GNSS spoofing or jamming. In this embodiment, the vehicle uses an alternate navigation sensor to determine its position. That position, from the alternate navigation sensor, is broadcast by the vehicle in an ADS-B message, in place of the inaccurate position derived from GNSS, to neighboring vehicles in the vicinity. Thus, all vehicles using the position data in ADS-B messages for their TCAS will have accurate data for neighboring vehicles in their vicinity when those neighboring vehicles are using the improvised ADS-B in the presence of GNSS spoofing or jamming.

In another embodiment, the TCAS is improvised by checking the correctness of position information for a vehicle received via a conventional ADS-B message. The improvised TCAS uses an alternate source for the position of the vehicle to verify the position information from the ADS-B message. Unless verified, the improvised TCAS does not use the position information from the ADS-B message to display the position of the vehicle or for generating alerts using a collision detection procedure. In this embodiment, the improvised TCAS obtains position data from an alternate source such as by requesting position data from a server at a ground station over a communication link, e.g., SATCOM, a cellular communication network (like 5G), or a datalink (like Aircraft Communications Addressing and Reporting System (ACARS)). The improvised TCAS further compares the position information from the ADS-B message with the position data from the alternate source received from the server to determine if the ADS-B position information is accurate, e.g., if there is GNSS spoofing or jamming in the area. If the ADS-B data is accurate, the improvised TCAS uses the position information from the ADS-B message. Otherwise, the improvised TCAS uses the position data from the alternate source. In this manner, the safety of the TCAS is improved by verifying ADS-B data before use by the improvised TCAS.

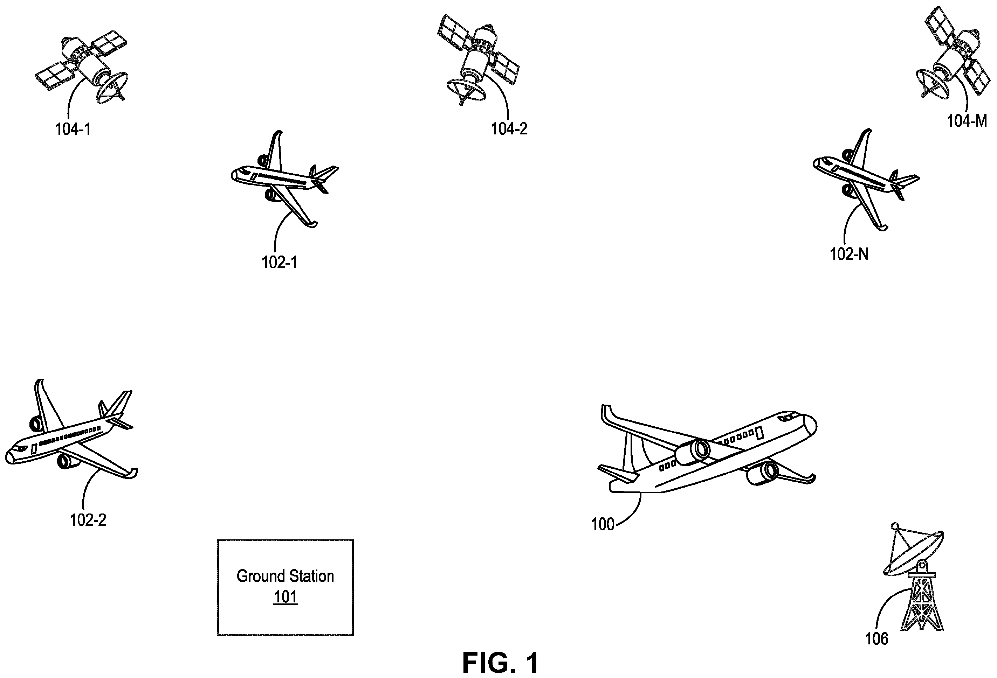

For pedagogical purposes, FIG. 1 is provided for use in describing both embodiments of the present invention. Specifically, the improvised ADS-B and the improvised TCAS. FIG. 1 illustrates a plurality of aircraft traveling in a region. Specifically, first aircraft 100 is traveling at a position identified, for example, by latitude, longitude and altitude. Additionally, neighboring aircraft 102-1 to 102-N are also shown having their own position defined by latitude, longitude and altitude. The neighboring aircraft 102-1 to 102-N are traveling in the vicinity of first aircraft 100. GNSS satellites 104-1 to 104-M are also depicted. These satellites may be part of a single constellation or may represent satellites from multiple constellations. First aircraft 100 and neighboring aircraft 102-1 to 102-N use signals from GNSS satellites 104-1 to 104-M to determine their respective positions. Additionally, also depicted in FIG. 1 is jammer or spoofer 106 that transmits signals to either jam (interfere with) or spoof signals from GNSS 104-1 to 104-M satellites (or a subset of GNSS satellites 104-1to 104-M). Finally, FIG. 1 also includes a ground station 101 for communicating with first aircraft 100 and neighboring aircraft 102-1 to 102-N.

For purposes of the description that follows, first aircraft 100 and neighboring aircraft 102-1 to 102-N are each equipped with GNSS receivers, alternate navigation technology, and are configured to send and receive ADS-B messages and implement TCAS functionality. Additionally, for the purpose of the description of the First Embodiment, neighboring aircraft 102-1 to 102-N are configured to implement the improvised ADS-B and first aircraft 100 is configured with a traditional or improvised TCAS. For purposes of the description of the Second Embodiment, first aircraft 100 is configured with an improvised TCAS and neighboring aircraft 102-1 to 102-N are equipped with conventional or improvised ADS-B. In both the First Embodiment and the Second Embodiment, the TCAS for each of the first aircraft 100 and neighboring aircraft 102-1 to 102-N are enabled to display the correct position of their neighboring aircraft even in the presence of GNSS spoofing or jamming.

Although embodiments of the present invention are described in terms of determining the position of an aircraft, the teachings of the present invention are not intended to be limited to use by aircraft. Rather, the teachings are also applicable for many types of vehicles that use GNSS signals in systems similar to ADS-B and TCAS including vehicles such as helicopters, unmanned aerial vehicles (UAV), Urban Air Mobility (UAM) vehicles, drones and other land-based vehicles or watercraft.

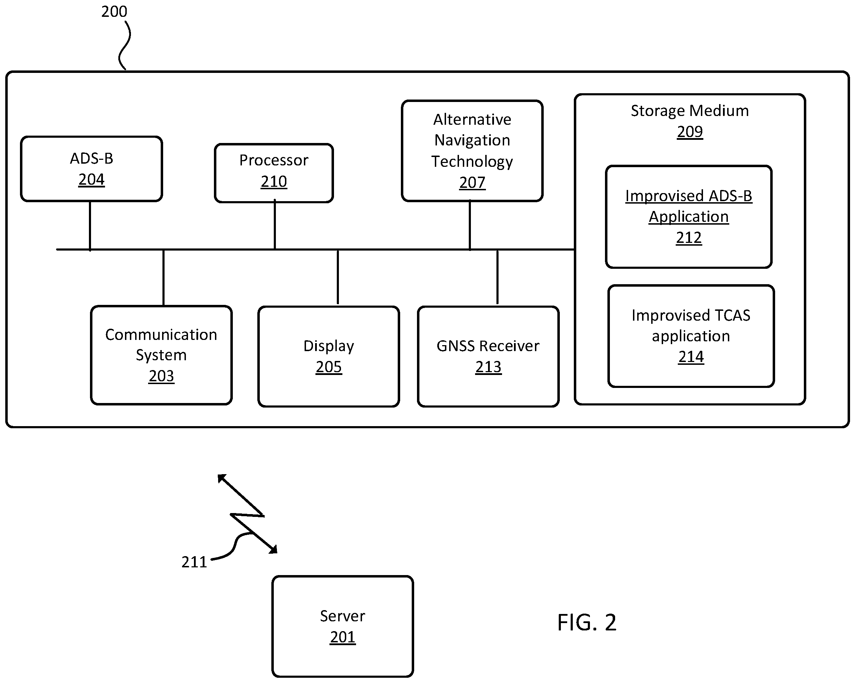

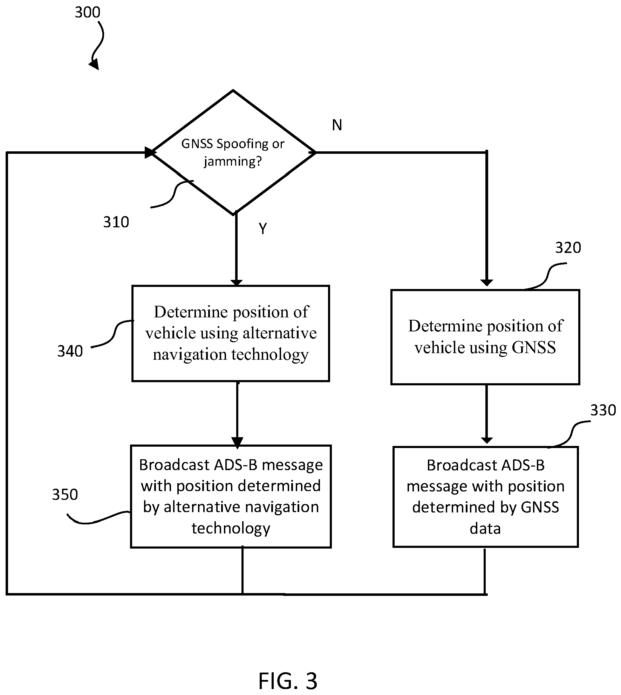

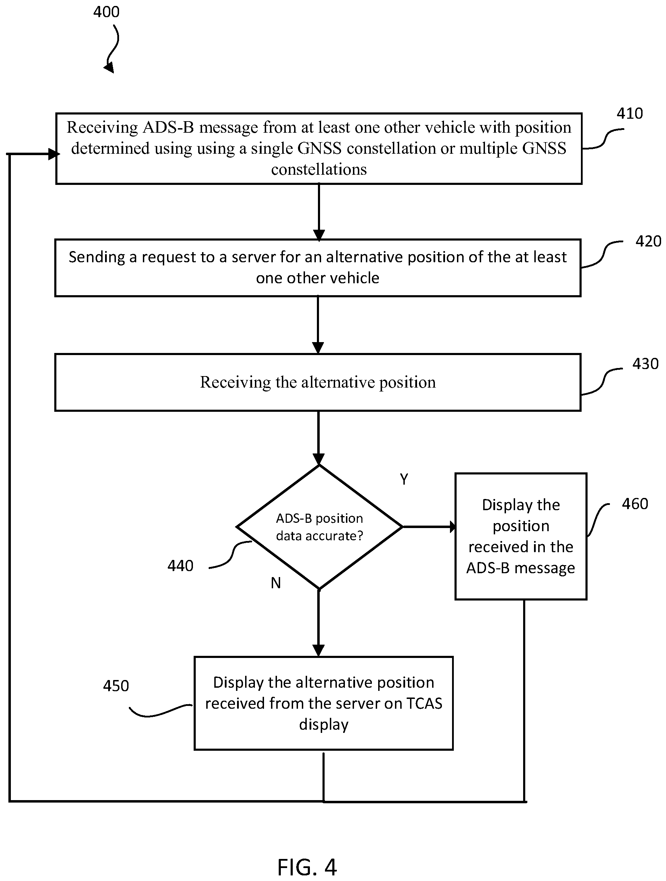

FIG. 2 is a block diagram of one embodiment of a system 200 for implementing an improvised TCAS and an improvised ADS-B for a vehicle such as first aircraft 100 or neighboring aircraft 102-1 to 102-N of FIG. 1. To accomplish these two functions, system 200 includes processor 210 that executes (runs) program code stored on non-transitory storage medium 209 as improvised ADS-B application 212 and improvised TCAS application 214. One embodiment of improvised ADS-B application 212 is described below with respect to FIG. 3. One embodiment of improvised TCAS application 214 is described below with respect to FIG. 4.

System 200 also includes circuitry for determining the position of the vehicle. Specifically, system 200 includes GNSS receiver 213 that receives signals from one or more GNSS constellations to derive a position of the vehicle. Additionally, system 200 also includes alternative navigation technology 207. Alternative navigation technology 207 includes, for example, at least one of:
1. an inertial navigation system (INS),
2. a very high frequency omnidirectional range (VOR) station,
3. distance measuring equipment (DME),
4. an instrument landing system (ILS),
5. tactical air navigation (TACAN),
6. Celestial Navigation,
7. visual navigation,
8. a primary radar, and/or
9. an alternative GNSS constellation different than the single GNSS constellation if the position is determined using the single GNSS constellation.

System 200 also includes ADS-B 204 that is used to transmit the position of the vehicle in the improvised ADS-B embodiment. Additionally, system 200 also includes display 205 and communication system 203 that are used in the improvised TCAS embodiment. Display 205 is configured to display the position of neighboring vehicles, e.g., neighboring aircraft 102-1 to 102-N, in the vicinity of the vehicle, e.g, first aircraft 100. Additionally, communication system 203 is used in the improvised TCAS embodiment to communicate with server 201 to receive alternate position information for neighboring vehicles. Communication system 203 comprises appropriate circuitry for communicating over a communication link 211 such as SATCOM, a cellular communication network (like 5G), a datalink (like Aircraft Communications Addressing and Reporting System (ACARS)) or other appropriate communication link for communicating between vehicles and servers. The operation of FIG. 2 is described below with reference to FIG. 3 and FIG. 4.

### First Embodiment: Improvised ADS-B

FIG. 3 is flowchart of one embodiment of a method 300 for improvised Automatic Dependent Surveillance-Broadcast (ADS-B) application 212 of FIG. 2. Method 300 produces an accurate measurement of the position of a first vehicle, such as first aircraft 100 of FIG. 1, to be broadcast in an ADS-B message by ADS-B 204 to other vehicles, such as neighboring aircraft 102-1 to 102-N, in the vicinity of the first vehicle even in the presence of GNSS spoofing or jamming. Method 300 enables the TCAS in the other vehicles to properly display the position of the first vehicle. Method 300 further enables the TCAS in the other vehicles to correctly determine potential collisions using the accurate measurement of the position of vehicles in the vicinity and the collision detection procedures and to alert the pilot of the other vehicles of the potential collisions.

Method 300 uses one of two processes to determine the position of the first vehicle. In a normal mode of operation, method 300 determines the position of the first vehicle using GNSS signals from GNSS receiver 213 of FIG. 2. In an alternative mode, when GNSS signals are spoofed or jammed in the area of the first vehicle, method 300 uses an alternative navigation technology, such as alternative navigation technology 207 of FIG. 2, to determine the position of the first vehicle.

To select between the normal mode and the alternative mode, method 300 determines whether there is GNSS spoofing or jamming in the area of the first vehicle at block 310. Such GNSS spoofing or jamming may be detected at the first vehicle or by a ground station, such as ground station 101 of FIG. 1. If jamming or spoofing is not found, method 300 operates in normal mode and determines a first measure of the position of the first vehicle using GNSS signals at GNSS receiver 213 at block 320. In some embodiments, the first measure of the position is determined using a single GNSS constellation while in other embodiments, the first measure of the position is determined using multiple GNSS constellations. Method 300 broadcasts an ADS-B message through ADS-B 204 of FIG. 2 with the position determined using GNSS data at block 330.

When GNSS spoofing or jamming is detected at block 310, method 300 operates in the alternative mode and determines a second measure of the position (alternate position) of the first vehicle using alternative navigation technology 207 at block 340. For example, method 300 may use any of the alternative navigation technologies identified above. Method 300 broadcasts an ADS-B message containing the second measure of the position (alternate position) of the first vehicle using the alternative navigation technology at block 350. Advantageously, by including the alternate position of the first vehicle determined using the alternative navigation technology in the presence of GNSS spoofing or jamming, the neighboring vehicles can safely use a traditional TCAS without verification of the position data in the ADS-B message. In one embodiment, method 300 is repeated each time ADS-B transmits an update of its position to ensure that the ADS-B message includes an accurate representation of the position (latitude, longitude, and altitude) of the first vehicle.

### Second Embodiment: Improvised TCAS

FIG. 4 is flowchart of one embodiment of a method 400 for improvised Traffic Collision Avoidance System (TCAS) application 214 of FIG. 2 for a first vehicle, such as first aircraft 100. In this embodiment, method 400 improvises a TCAS by checking the accuracy of position information received via a conventional ADS-B message at ADS-B 204 using an alternate source, e.g., server 201, before the position information from ADS-B 204 is used by method 400 to populate display 205 with the position of the other vehicles or is used by a collision detection procedure.

In this embodiment, method 400 receives an ADS-B message from at least one other vehicle, such as neighboring aircraft 102-1 to 102-N of FIG. 1, in the vicinity of the first vehicle, such as first aircraft 100, via ADS-B 204 at block 410. The ADS-B message includes the position of the at least one other vehicle with the position determined using a single GNSS constellation or multiple GNSS constellations. To check the accuracy of the position received in the ADS-B message, method 400 sends a request to a server 201 via communication system 203 to obtain position data for the at least one other vehicle from an alternate source at block 420 (alternate position data), the alternate source different from the single GNSS constellation or multiple GNSS constellations used for the position information in the ADS-B message. In one embodiment, server 201 is located at a ground station, while in other embodiments, server 201 may be located on another vehicle, in an airline operations center, an air traffic control center or any other appropriate location that gathers location data on vehicles in the vicinity of the first vehicle. Embodiments of method 400 request position data from server 201 over a communication link 211, e.g., SATCOM, a cellular communication network (like 5G), a datalink (like Aircraft Communications Addressing and Reporting System (ACARS)) or other appropriate communication link for communicating between vehicles and servers. The alternate position data is received by communication system 203 from server 201 over communication link 211 at block 430.

Method 400 further compares the position information in the ADS-B message received at ADS-B 204 at block 410 with the alternate position data from the alternate source received from server 201 to determine if the ADS-B position data is accurate, e.g., if there is GNSS spoofing or jamming in the area, at block 440. If the ADS-B data is accurate, method 400 uses the position information from the ADS-B message to display the at least one other vehicle on display 205 of system 200 at block 460. Otherwise, if the position information from the ADS-B message is determined to be inaccurate due to GNSS spoofing or jamming, method 400 uses the alternate position data from the alternate source received at block 430 to display the at least one other vehicle at the alternate position on display 205 at block 450. Further, method 400 also flags, in some embodiments, the at least one other vehicle as operating in a GNSS denied environment when method 400 determines that the ADS-B message contains inaccurate position data. In this manner, the safety of the TCAS is improved by verifying ADS-B data before use by the improvised TCAS.

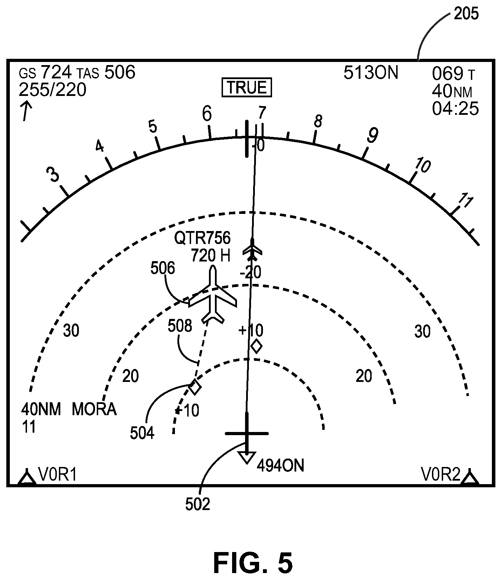

FIG. 5 is a graphical representation of one embodiment of a display 205 for the system 200 of FIG. 2. In this example, the position of the first vehicle is represented by icon 502. Additionally, one of the at least one other vehicles is also represented on display 205 relative to the first vehicle. The position of the at least on other vehicle is shown by icon 504 at the position derived using the ADS-B message. Because, in this example, method 400 determined that the ADS-B position was not accurate, additional icon 506 (rendered as a red outline of a vehicle) is also shown at the alternate position received at block 430. Further, an optional dotted line 508 is rendered to connect icon 504 at the spoofed (or inaccurate position) with additional icon 506 at the correct location of the at least one other vehicle. This alternate position is also used by collision avoidance procedures of the TCAS to help the first vehicle to avoid collisions.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory or other non-transitory computer readable medium or storage mediun. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs) or Field Programmable Gate Arrays (FGPAs).

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a method of improving an Automatic Dependent Surveillance-Broadcast (ADS-B) message for a first vehicle, the method comprising: determining whether Global Navigation Satellite System (GNSS) signals are spoofed or jammed in an area of the first vehicle; when GNSS signals are spoofed or jammed, determining an alternate position of the first vehicle using an alternative navigation technology different from a single GNSS constellation or multiple GNSS constellations; and broadcasting the ADS-B message containing the alternate position of the first vehicle determined using the alternative navigation technology.

Example 2 includes the method of example 1, wherein determining whether GNSS signals are spoofed or jammed is accomplished by the first vehicle or by a ground station.

Example 3 includes the method of any of examples 1 and 2, wherein determining the alternate position of the first vehicle using the alternative navigation technology comprises determining the alternate position of the first vehicle using one of: an inertial navigation system (INS), a very high frequency omnidirectional range (VOR) station, distance measuring equipment (DME), an instrument landing system (ILS), tactical air navigation (TACAN), Celestial Navigation, visual navigation, a primary radar and/or an alternative GNSS constellation different than the single GNSS constellation if the position is determined using the single GNSS constellation.

Example 4 includes the method of any of examples 1 to 3, wherein broadcasting the ADS-B message containing the alternate position of the first vehicle determined using the alternative navigation technology comprises broadcasting the alternate position to neighboring vehicles that include Traffic Collision and Avoidance Systems (TCAS) that are configured to use the position from the ADS-B message without verification.

Example 5 includes the method of any of examples 1 to 4, and further comprising: determining a position of the first vehicle using the single GNSS constellation or multiple GNSS constellations when GNSS spoofing or jamming is not detected; and broadcasting the ADS-B message containing the position of the first vehicle.

Example 6 includes a method of improvising a Traffic Collision Avoidance system (TCAS) for a first vehicle, the method comprising: receiving an Automatic Dependent Surveillance-Broadcast (ADS-B) message at the first vehicle from at least one other vehicle with a current position of the at least one other vehicle determined using a single GNSS constellation or multiple GNSS constellations; sending a request for an alternative position of the at least one other vehicle to a server, wherein the alternative position is determined using an alternative navigation technology different from the single GNSS constellation or multiple GNSS constellations; receiving the alternative position of the at least one other vehicle from the server; and when the current position in the ADS-B message is an inaccurate position, displaying the alternative position of the at least one other vehicle received from the server on a TCAS display of the first vehicle.

Example 7 includes the method of example 6, and further comprising: comparing the current position of the at least one vehicle in the ADS-B message with the alternative position of the at least one other vehicle received from the server; and determining whether the current position of the at least one other vehicle in the ADS-B message is accurate based on the comparing.

Example 8 includes the method of any of examples 6 and 7, and further comprising flagging the at least one other vehicle in response to the determination that the current position in the ADS-B message is an inaccurate position.

Example 9 includes the method of any of examples 6 to 8, and further comprising using the alternative position of the at least one other vehicle for collision avoidance procedures in the TCAS in response to the determination that the current position in the ADS-B message is an inaccurate position.

Example 10 includes the method of any of examples 6 to 9, wherein displaying the alternative position of the at least one other vehicle received from the server includes rendering an icon of the at least one other vehicle at the alternative position and rendering a dotted line to the inaccurate position of the at least one other vehicle on the TCAS display of the first vehicle.

Example 11 includes the method of any of examples 6 to 10, wherein sending the request for the alternative position of the at least one other vehicle to the server includes using SATCOM, a cellular communication network, or a datalink; wherein receiving the alternative position of the at least one other vehicle from the server includes using SATCOM, the cellular communication network, or the datalink.

Example 12 includes the method of any of examples 6 to 11, wherein the alternative navigation technology includes an inertial navigation system (INS), very high frequency omnidirectional range (VOR), distance measuring equipment (DME), an instrument landing system (ILS), tactical air navigation (TACAN), Celestial Navigation, visual navigation, a primary radar, and/or an alternative GNSS constellation different than the single GNSS constellation if the current position is determined using the single GNSS constellation.

Example 13 includes a Traffic Collision Avoidance System on a first vehicle, the system comprising: an Automatic Dependent Surveillance-Broadcast (ADS-B) receiver that is configured to receive an ADS-B message from at least one other vehicle containing a current position of the at least one other vehicle determined using a single GNSS constellation or multiple GNSS constellations; a communication system configured to communication with at least a server; a display configured to display the current position of the at least one other vehicle relative to a position of the first vehicle; a non-transitory storage medium configured to store a position determination application; and a processor, in communication with the ADS-B receiver, the communication system, the display, and the non-transitory storage medium, the processor configured to run the position determination application, which, when executed by the processor causes the processor to execute a method including: sending a request for an alternative position of the at least one other vehicle to the server over the communication system, wherein the alternative position is determined using an alternative navigation technology different from the single GNSS constellation or multiple GNSS constellations; receiving the alternative position of the at least one other vehicle from the server over the communication system; and in response to a determination that the current position in the ADS-B message is an inaccurate position, displaying the alternative position of the at least one other vehicle received from the server on the display of the first vehicle.

Example 14 includes the system of example 13, wherein the communication system comprises SATCOM, a cellular communication network or a datalink.

Example 15 includes the system of any of examples 13 and 14, wherein the method executed by the processor further includes: comparing the current position of the at least one other vehicle in the ADS-B message with the alternative position of the at least one other vehicle received from the server; and determining whether the current position of the at least one other vehicle in the ADS-B message is accurate based on the comparing.

Example 16 includes the system of any of examples 13 to 15, wherein the method executed by the processor further includes flagging the at least one other vehicle in response to the determination that the current position in the ADS-B message is an inaccurate position.

Example 17 includes the system of any of examples 13 to 16, wherein the method executed by the processor further includes using the alternative position of the at least one other vehicle for collision avoidance procedures in response to the determination that the current position in the ADS-B message is an inaccurate position.

Example 18 includes the system of any of examples 13 to 17, wherein displaying the position of the at least one other vehicle received from the server includes rendering an icon of the at least one other vehicle at the alternative position and rendering a dotted line to the inaccurate position of the at least one other vehicle on the display of the first vehicle.

Example 19 includes the system of any of examples 13 to 18, wherein the alternative navigation technology includes an inertial navigation system (INS), very high frequency omnidirectional range (VOR), distance measuring equipment (DME), an instrument landing system (ILS), tactical air navigation (TACAN), Celestial Navigation, visual navigation, a primary radar, and/or an alternative GNSS constellation different than the single GNSS constellation if the position is determined using the single GNSS constellation.

Example 20 includes the system of any of examples 13 to 19, wherein displaying the position of the at least one other vehicle received from the server includes rendering an icon of the at least one other vehicle at the alternative position.

## Claims

1. A method (400) of improvising a Traffic Collision Avoidance system (TCAS) for a first vehicle, the method comprising:
receiving an Automatic Dependent Surveillance-Broadcast (ADS-B) message at the first vehicle from at least one other vehicle with a current position of the at least one other vehicle determined using a single GNSS constellation or multiple GNSS constellations (410);
sending a request for an alternative position of the at least one other vehicle to a server (420), wherein the alternative position is determined using an alternative navigation technology different from the single GNSS constellation or multiple GNSS constellations;
receiving the alternative position of the at least one other vehicle from the server (430); and
when the current position in the ADS-B message is an inaccurate position, displaying the alternative position of the at least one other vehicle received from the server on a TCAS display of the first vehicle (450).

2. The method of claim 1, and further comprising:
comparing the current position of the at least one vehicle in the ADS-B message with the alternative position of the at least one other vehicle received from the server; and
determining whether the current position of the at least one other vehicle in the ADS-B message is accurate based on the comparing.

3. The method of claim 1, and further comprising flagging the at least one other vehicle in response to the determination that the current position in the ADS-B message is an inaccurate position.

4. The method of claim 1, and further comprising using the alternative position of the at least one other vehicle for collision avoidance procedures in the TCAS in response to the determination that the current position in the ADS-B message is an inaccurate position.

5. The method of claim 1, wherein displaying the alternative position of the at least one other vehicle received from the server includes rendering an icon of the at least one other vehicle at the alternative position (504) and rendering a dotted line (508) to the inaccurate position (506) of the at least one other vehicle on the TCAS display (205) of the first vehicle.

6. The method of claim 1, wherein sending the request for the alternative position of the at least one other vehicle to the server includes using SATCOM, a cellular communication network, or a datalink;
wherein receiving the alternative position of the at least one other vehicle from the server includes using SATCOM, the cellular communication network, or the datalink.

7. The method of claim 1, wherein the alternative navigation technology includes an inertial navigation system (INS), very high frequency omnidirectional range (VOR), distance measuring equipment (DME), an instrument landing system (ILS), tactical air navigation (TACAN), Celestial Navigation, visual navigation, a primary radar, and/or an alternative GNSS constellation different than the single GNSS constellation if the current position is determined using the single GNSS constellation.

8. A Traffic Collision Avoidance System on a first vehicle, the system comprising:
an Automatic Dependent Surveillance-Broadcast (ADS-B) receiver (204) that is configured to receive an ADS-B message from at least one other vehicle containing a current position of the at least one other vehicle determined using a single GNSS constellation or multiple GNSS constellations (410);
a communication system (203) configured to communication with at least a server (201);
a display (205) configured to display the current position of the at least one other vehicle relative to a position of the first vehicle;
a non-transitory storage medium (209) configured to store a position determination application; and
a processor (210), in communication with the ADS-B receiver, the communication system, the display, and the non-transitory storage medium, the processor configured to run the position determination application, which, when executed by the processor causes the processor to execute a method (400) including:
sending a request for an alternative position of the at least one other vehicle to the server over the communication system, wherein the alternative position is determined using an alternative navigation technology different from the single GNSS constellation or multiple GNSS constellations (420);
receiving the alternative position of the at least one other vehicle from the server over the communication system (430); and
in response to a determination that the current position in the ADS-B message is an inaccurate position, displaying the alternative position of the at least one other vehicle received from the server on the display of the first vehicle (450).

9. The system of claim 8, wherein the communication system comprises SATCOM, a cellular communication network or a datalink.

10. The system of claim 8, wherein the alternative navigation technology includes an inertial navigation system (INS), very high frequency omnidirectional range (VOR), distance measuring equipment (DME), an instrument landing system (ILS), tactical air navigation (TACAN), Celestial Navigation, visual navigation, a primary radar, and/or an alternative GNSS constellation different than the single GNSS constellation if the position is determined using the single GNSS constellation.
